Europäisches Patentamt

European Patent Office

Office européen des brevets

(19)

(11) **EP 1 101 196 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.$^7$: **G06T 7/20**

(21) Anmeldenummer: **99952264.2**

(86) Internationale Anmeldenummer:
**PCT/DE99/02406**

(22) Anmeldetag: **02.08.1999**

(87) Internationale Veröffentlichungsnummer:
**WO 00/08601 (17.02.2000 Gazette 2000/07)**

(54) **VERFAHREN UND ANORDNUNG ZUR BEWEGUNGSSCHÄTZUNG IN EINEM DIGITALISIERTEN BILD MIT BILDPUNKTEN**

METHOD AND DEVICE FOR ESTIMATING MOTION IN A DIGITIZED IMAGE WITH PIXELS

PROCEDE ET DISPOSITIF D'EVALUATION DU MOUVEMENT DANS UNE IMAGE NUMERISEE POSSEDANT DES PIXELS

(84) Benannte Vertragsstaaten:
**DE FR GB IT NL SE**

(30) Priorität: **07.08.1998 DE 19835845**

(43) Veröffentlichungstag der Anmeldung:
**23.05.2001 Patentblatt 2001/21**

(73) Patentinhaber: **Infineon Technologies AG**
**81669 München (DE)**

(72) Erfinder:
• **PANDEL, Jürgen**
**D-83620 Feldkirchen-Westerham (DE)**
• **BÄSE, Gero**
**D-81371 München (DE)**
• **OERTEL, Norbert**
**D-81737 München (DE)**

(74) Vertreter: **Banzer, Hans-Jörg, Dipl.-Ing. et al**
**Kraus & Weisert**
**Patent- und Rechtsanwälte**
**Thomas-Wimmer-Ring 15**
**80539 München (DE)**

(56) Entgegenhaltungen:
**US-A- 5 537 155**

• **OH H -S ET AL: "BLOCK-MATCHING ALGORITHM BASED ON DYNAMIC ADJUSTMENT OF SEARCH WINDOW FOR LOW BIT-RATE VIDEO CODING" JOURNAL OF ELECTRONIC IMAGING,US,SPIE + IS&T, Bd. 7, Nr. 3, Juli 1998 (1998-07), Seite 571-577 XP000771764 ISSN: 1017-9909**

**Beschreibung**

Die Erfindung betrifft die Bewegungsschätzung in einem digitalisierten Bild mit Bildpunkten.

Ein solches Verfahren ist aus [1] bekannt.

Bei dem Verfahren zur Bewegungsschätzung aus [1] sind Bildpunkte eines digitalisierten Bildes, für das die Bewegungsschätzung erfolgen soll, in Bildblöcke gruppiert.

Für jeden Bildblock des Bildes wird in einem Suchbereich vorgebbarer Größe versucht, einen Bereich der Größe des Bildblocks zu ermitteln, in dem die Ähnlichkeit der Codierungsinformation, die in dem Bildblock, für den die Bewegungsschätzung durchgeführt wird, enthalten ist, möglichst gut übereinstimmt.

Unter Codierungsinformation ist im weiteren Helligkeitsinformation (Luminanzwerte) oder Farbinformation (Chrominanzwerte) zu verstehen, die jeweils einem Bildpunkt zugeordnet ist.

Hierzu wird in einem zeitlich vorangegangenen Bild ausgehend von der Position, in dem sich der Bildblock in dem zeitlich vorangegangenen Bild befindet, in einer Umgebung vorgebbarer Größe (Suchbereich) jeweils ein Gebiet der entsprechenden Blockgröße mit der gleichen Anzahl Bildpunkten, wie sie in dem Bildblock enthalten ist, für jede Position die Summe über die quadratische oder absolute Differenz der Codierungsinformation zwischen dem Bildblock, für den die Bewegungsschätzung durchgeführt werden soll und dem jeweiligen Gebiet in dem zeitlich vorangegangenen Bild, gebildet. Das Gebiet, welches die größte Übereinstimmung aufweist, d.h. den minimalen Summenwert, wird als passender Bildblock angesehen und es wird die örtliche Verschiebung des Bildblocks zwischen dem "besten" Gebiet in dem zeitlich vorangegangenen Bild und dem Bildblock ermittelt. Diese Verschiebung wird als Bewegungsvektor bezeichnet.

Die Druckschrift Oh et al "Block-matching algorithm based on dynamic adjustment of search window for low bit-rate video coding", Journal of Electronic Imaging, US, Bd. 7, No. 3, Juli 1998, Seiten 571-577 beschreibt ein Verfahren zur Bewegungsschätzung von Objekten in einer Videosequenz unter Verwendung eines Blockübereinstimmungs-Algorithmus und die Verwendung der durch dieses Verfahren bestimmten Bewegungsvektoren zur Kompression der Videodaten. Bei der Schützung der Bewegungsvektoren werden die einzelnen Videobilder in Blöcke von N x N Pixeln zerlegt. Für jeden Bildblock des aktuellen Videobildes wird der zugehörige, am besten passende Bildblock in einem vorangegangenen Referenz-Videobild bestimmt, der innerhalb eines bestimmten Suchbereiches liegt und aus der Ortsdifferenz des Blockes in den beiden Videobildern der gesuchte Bewegungsvektor für diesen Bildblock bestimmt. Das Verfahren benutzt dabei eine variable Größe des Suchbereichs, in dem nach übereinstimmenden Bildblöcken innerhalb des Referenz-Videobildes gesucht wird.

Die Druckschrift US-A-5 537 155 beschreibt ein Verfahren zur Videokompression, bei dem eine Bewegungsschätzung zwischen den einzelnen Bildern einer Videosequenz durchgeführt wird. Zur Bewegungsschätzung wird ein Blockübereinstimmungs-Algorithmus eingesetzt, bei dem die Bildblöcke im aktuellen Videobild mit Bildblöcken aus einem vorhergehenden Videobild verglichen werden. Dieser Vergleich wird in unterschiedlichen Suchbereichen mit einer jeweils unterschiedlichen Schrittweite durchgeführt. Um die Position des aktuellen Bildblocks herum wird in einem ersten Suchbereich innerhalb des Vergleichsbildes mit einer kleinen Schrittweite gesucht. In größeren Bereichen um den aktuellen Bildblock herum wird anschließend mit entsprechend größeren Schrittweiten gesucht.

Wenn der entsprechende Videoblock im Vergleichsbild gefunden wird, wird damit der Bewegungsvektor für diesen Block bestimmt, der anschließend für die Codierung des Videoblocks verwendet wird.

Der Erfindung liegt das Problem zugrunde, ein Verfahren und eine Vorrichtung zur Bewegungsschätzung zu schaffen, bei dem insgesamt die erforderliche Anzahl von Bits zur Codierung der Bewegungsvektoren verringert wird.

Das Problem wird durch das Verfahren sowie durch die Anordnung gemäß den Merkmalen der unabhängigen Patentansprüche gelöst.

Bei dem Verfahren zur Bewegungsschätzung eines digitalisierten Bildes mit Bildpunkten sind die Bildpunkte in Bildblöcke gruppiert. Die Bildpunkte sind zumindest in einen ersten Bildbereich und einen zweiten Bildbereich gruppiert. Es wird eine erste Bewegungsschätzung in einem ersten Suchbereich für mindestens einen ersten Bildblock im ersten Bildbereich durchgeführt zur Ermittlung eines ersten Bewegungsvektors, mit dem eine Verschiebung des ersten Bildblocks im Vergleich zu dem ersten Bildblock in einem zeitlich vorangegangenen Vorgängerbild und/oder im Vergleich zu dem ersten Bildblock in einem zeitlich nachfolgenden Nachfolgebild beschrieben wird. Ferner wird eine zweite Bewegungsschätzung in einem zweiten Suchbereich für mindestens einen zweiten Bildblock im zweiten Bildbereich durchgeführt zur Ermittlung eines zweiten Bewegungsvektors, mit dem eine Verschiebung des zweiten Bildblocks im Vergleich zu dem zweiten Bildblock in einem zeitlich vorangegangenen Vorgangerbild und/oder im Vergleich zu dem zweiten Bildblock in einem zeitlich nachfolgenden Nachfolgebild beschrieben wird. Der erste Suchbereich und der zweite Suchbereich weisen dabei eine unterschiedliche Größe auf.

Die Anordnung zur Bewegungsschätzung eines digitalisierten Bildes mit Bildpunkten weist einen Prozessor auf, der derart eingerichtet ist, daß folgende Schritte durchführbar sind:

- die Bildpunkte sind in Bildblöcke gruppiert,

- die Bildpunkte sind zumindest in einen ersten Bildbereich und in einen zweiten Bildbereich gruppiert,
- eine erste Bewegungsschätzung wird in einem ersten Suchbereich für mindestens einen ersten Bildblock im ersten Bildbereich durchgeführt zur Ermittlung eines ersten Bewegungsvektors, mit dem eine Verschiebung des ersten Bildblocks im Vergleich zu dem ersten Bildblock in einem zeitlich vorangegangenen Vorgängerbild und/oder im Vergleich zu dem ersten Bildblock in einem zeitlich nachfolgenden Nachfolgebild beschrieben wird,
- eine zweite Bewegungsschätzung wird in einem zweiten Suchbereich für mindestens einen zweiten Bildblock im zweiten Bildbereich durchgeführt zur Ermittlung eines zweiten Bewegungsvektors, mit dem eine Verschiebung des zweiten Bildblocks im Vergleich zu dem zweiten Bildblock in einem zeitlich vorangegangenen Vorgängerbild und/oder im Vergleich zu dem zweiten Bildblock in einem zeitlich nachfolgenden Nachfolgebild beschrieben wird, und
- der erste Suchbereich und der zweite Suchbereich weisen eine unterschiedliche Größe auf.

Durch die Erfindung wird es möglich, benötigte Datenrate für die Übertragung komprimierter Videodaten zu verringern, da die Größe der Bewegungsvektoren adaptiv an qualitative Anforderungen angepaßt werden kann und somit, ohne den subjektiven Qualitätseindruck eines Bildes merklich zu vermindern auch beispielsweise in Bereichen, in denen nur eine niedrige Qualität erforderlich ist, auch nur ein sehr kleiner Suchbereich vorgesehen ist. Damit wird die maximale Größe eines Bewegungsvektors in diesem Suchbereich relativ klein, wodurch die Anzahl von Bits zur Codierung des Bewegungsvektors geringer wird.

Anschaulich ist die Erfindung darin zu sehen, daß für Bildbereiche zur Bewegungsschätzung der Bildblöcke der Bildbereiche Suchräume unterschiedlicher Größe eingesetzt werden, wodurch eine flexible, qualitätsangepaßte Reduktion der erforderlichen Datenrate zur Codierung der Bewegungsvektoren erreicht wird.

Vorteilhafte Weiterbildungen der Erfindung ergeben sich aus den abhängigen Ansprüchen.

Es ist in einer Weiterbildung vorgesehen, daß die Größe des ersten Suchbereichs und/oder des zweiten Suchbereichs verändert wird abhängig von einer vorgegebenen Bildqualität, mit der der erste Bildblock bzw. der zweite Bildblock codiert wird.

Auf diese Weise wird ein Maß zur Begrenzung der Suchräume angegeben, die eine Einsparung benötigter Datenrate unter Berücksichtigung der erforderlichen Bildqualität ermöglicht.

Ein äußerst einfaches Kriterium zur Ermittlung der Größe des jeweiligen Suchbereichs ist in einer Weiterbildung ein Quantisierungsparameter mit dem der erste Bildblock bzw. der zweite Bildblock quantisiert wird.

In einer weiteren Ausgestaltung ist es vorgesehen, im Rahmen einer variablen Längencodierung der Bewegungsvektoren mehrere Tabellen, in denen Codes zur variablen Längencodierung gespeichert sind, zu verwenden, wodurch eine weitere Einsparung an erforderlicher Datenrate zur Übertragung der Bilddaten erreicht wird.

Ein Ausführungsbeispiel der Erfindung ist in den Figuren dargestellt und wird im weiteren näher erläutert.

Es zeigen

Figuren 1a bis 1c    eine Skizze eines Bildes und eines zeitlich vorangegangenen Bildes, in dem das der Erfindung zugrundeliegende Prinzip dargestellt ist;

Figur 2    eine Anordnung zweier Rechner, einer Kamera und eines Bildschirms, mit denen die Codierung, die Übertragung sowie die Decodierung und Darstellung der Bilddaten erfolgen;

Figur 3    eine Skizze einer Vorrichtung zur blockbasierten Codierung eines digitalisierten Bildes.

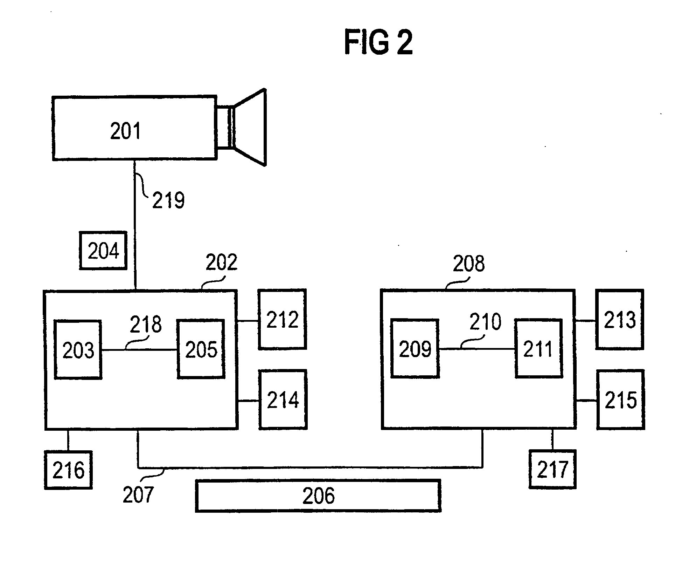

In **Fig.2** ist eine Anordnung dargestellt, die zwei Rechner 202, 208 und eine Kamera 201 umfaßt, wobei Bildcodierung, Übertragung der Bilddaten und Bilddecodierung veranschaulicht werden.

Eine Kamera 201 ist mit einem ersten Rechner 202 über eine Leitung 219 verbunden. Die Kamera 201 übermittelt aufgenommene Bilder 204 an den ersten Rechner 202. Der erste Rechner 202 verfügt über einen ersten Prozessor 203, der über einen Bus 218 mit einem Bildspeicher 205 verbunden ist. Mit dem ersten Prozessor 203 des ersten Rechners 202 wird ein Verfahren zur Bildcodierung durchgeführt. Auf diese Art codierte Bilddaten 206 werden von dem ersten Rechner 202 über eine Kommunikationsverbindung 207, vorzugsweise eine Leitung oder eine Funkstrecke, zu einem zweiten Rechner 208 übertragen. Der zweite Rechner 208 enthält einen zweiten Prozessor 209, der über einen Bus 210 mit einem Bildspeicher 211 verbunden ist. Mit dem zweiten Prozessor 209 wird ein Verfahren zur Bilddecodierung durchgeführt.

Sowohl der erste Rechner 202 als auch der zweite Rechner 208 verfügen jeweils über einen Bildschirm 212 bzw. 213, auf dem die Bilddaten 204 visualisiert werden. Zur Bedienung sowohl des ersten Rechners 202 als auch des zweiten Rechners 208 sind jeweils Eingabeeinheiten vorgesehen, vorzugsweise eine Tastatur 214 bzw. 215, sowie eine Computermaus 216 bzw. 217.

Die Bilddaten 204, die von der Kamera 201 über die Leitung 219 zu dem ersten Rechner 202 übertragen werden, sind Daten im Zeitbereich, während die Daten 206, die von dem ersten Rechner 202 zu dem zweiten Rechner 208 über die Kommunikationsverbindung 207 übertragen werden, Bilddaten im Spektralbereich sind.

Auf einem Bildschirm 213 werden die decodierten Bilddaten dargestellt.

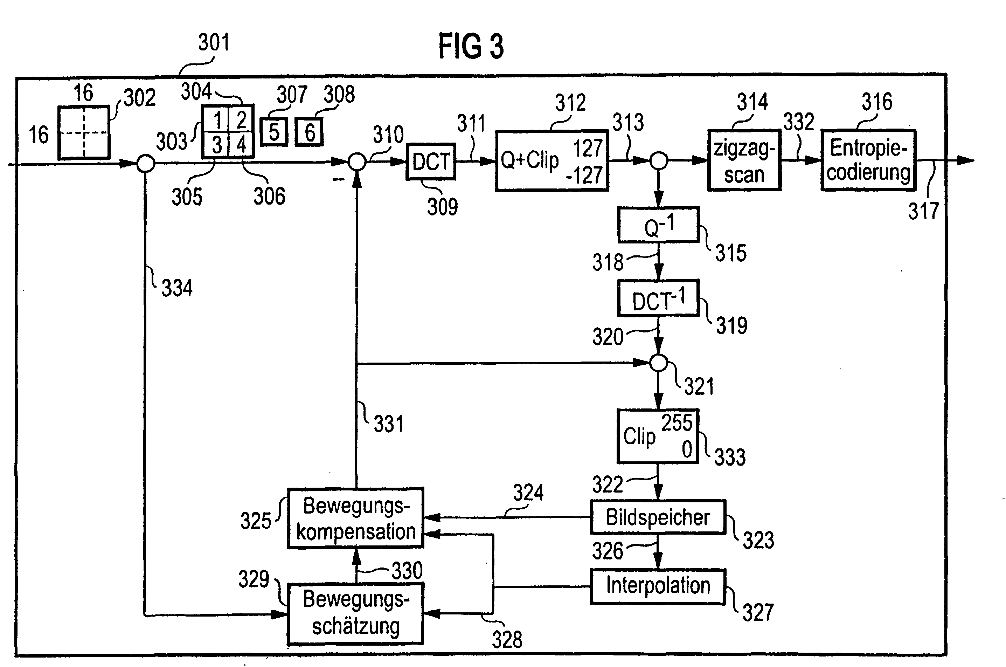

**Fig.3** zeigt eine Skizze einer Anordnung zur Durchführung eines blockbasierten Bildcodierverfahrens gemäß H.263-Standard (siehe [5]).

Ein zu codierender Videodatenstrom mit zeitlich aufeinanderfolgenden digitalisierten Bildern wird einer Bildcodierungseinheit 301 zugeführt. Die digitalisierten Bilder sind unterteilt in Makroblöcke 302, wobei jeder Makroblock 16x16 Bildpunkte enthält. Der Makroblock 302 umfaßt 4 Bildblöcke 303, 304, 305 und 306, wobei jeder Bildblock 8x8 Bildpunkte, denen Luminanzwerte (Helligkeitswerte) zugeordnet sind, enthält. Weiterhin umfaßt jeder Makroblock 302 zwei Chrominanzblöcke 307 und 308 mit den Bildpunkten zugeordneten Chrominanzwerten (Farbinformation, Farbsättigung).

Der Block eines Bildes enthält einen Luminanzwert (=Helligkeit), einen ersten Chrominanzwert und einen zweiten Chrominanzwert. Dabei werden Luminanzwert, erster Chrominanzwert und zweiter Chrominanzwert als Farbwerte bezeichnet.

Die Bildblöcke werden einer Transformationscodierungseinheit 309 zugeführt. Bei einer Differenzbildcodierung werden zu codierende Werte von Bildblöcken zeitlich vorangegangener Bilder von den aktuell zu codierenden Bildblöcken abgezogen, es wird nur die Differenzbildungsinformation 310 der Transformationscodierungseinheit (Diskrete Cosinus Transformation, DCT) 309 zugeführt. Dazu wird über eine Verbindung 334 der aktuelle Makroblock 302 einer Bewegungsschätzungseinheit 329 mitgeteilt. In der Transformationscodierungseinheit 309 werden für die zu codierenden Bildblöcke bzw. Differenzbildblöcke Spektralkoeffizienten 311 gebildet und einer Quantisierungseinheit 312 zugeführt.

Quantisierte Spektralkoeffizienten 313 werden sowohl einer Scaneinheit 314 als auch einer inversen Quantisierungseinheit 315 in einem Rückwärtspfad zugeführt. Nach einem Scanverfahren, z.B. einem "zigzag"-Scanverfahren, wird auf den gescannten Spektralkoeffizienten 332 eine Entropiecodierung in einer dafür vorgesehenen Entropiecodierungseinheit 316 durchgeführt. Die entropiecodierten Spektralkoeffizienten werden als codierte Bilddaten 317 über einen Kanal, vorzugsweise eine Leitung oder eine Funkstrecke, zu einem Decoder übertragen.

In der inversen Quantisierungseinheit 315 erfolgt eine inverse Quantisierung der quantisierten Spektralkoeffizienten 313. So gewonnene Spektralkoeffizienten 318 werden einer inversen Transformationscodierungseinheit 319 (Inverse Diskrete Cosinus Transformation, IDCT) zugeführt. Rekonstruierte Codierungswerte (auch Differenzcodierungswerte) 320 werden im Differenzbildmodus einem Addierer 321 zugeführt. Der Addierer 321 erhält ferner Codierungswerte eines Bildblocks, die sich aus einem zeitlich vorangegangenen Bild nach einer bereits durchgeführten Bewegungskompensation ergeben. Mit dem Addierer 321 werden rekonstruierte Bildblöcke 322 gebildet und in einem Bildspeicher 323 abgespeichert.

Chrominanzwerte 324 der rekonstruierten Bildblöcke 322 werden aus dem Bildspeicher 323 einer Bewegungskompensationseinheit 325 zugeführt. Für Helligkeitswerte 326 erfolgt eine Interpolation in einer dafür vorgesehenen Interpolationseinheit 327. Anhand der Interpolation wird die Anzahl in dem jeweiligen Bildblock enthaltener Helligkeitswerte vorzugsweise vervierfacht. Alle Helligkeitswerte 328 werden sowohl der Bewegungskompensationseinheit 325 als auch der Bewegungsschätzungseinheit 329 zugeführt. Die Bewegungsschätzungseinheit 329 erhält außerdem die Bildblöcke des jeweils zu codierenden Makroblocks (16x16 Bildpunkte) über die Verbindung 334. In der Bewegungsschätzungseinheit 329 erfolgt die Bewegungsschätzung unter Berücksichtigung der interpolierten Helligkeitswerte ("Bewegungsschätzung auf Halbpixelbasis").

Das Ergebnis der Bewegungsschätzung ist ein Bewegungsvektor 330, durch den eine örtliche Verschiebung des ausgewählten Makroblocks aus dem zeitlich vorangegangenen Bild zu dem zu codierenden Makroblock 302 zum Ausdruck kommt.

Sowohl Helligkeitsinformation als auch Chrominanzinformation bezogen auf den durch die Bewegungsschätzungseinheit 329 ermittelten Makroblock werden um den Bewegungsvektor 330 verschoben und von den Codierungswerten des Makroblocks 302 subtrahiert (siehe Datenpfad 231).

Als Ergebnis der Bewegungschätzung ergibt sich somit der Bewegungsvektor 330 mit zwei Bewegungsvektorkomponenten, einer ersten Bewegungsvektorkomponente $BV_x$ und einer zweiten Bewegungsvektorkomponente $BV_y$ entlang der ersten Richtung x und der zweiten Richtung y:

$$BV = \begin{pmatrix} BV_x \\ BV_y \end{pmatrix}.$$

Der Bewegungsvektor 330 wird dem Bildblock zugeordnet.

Die Bildcodierungseinheit aus Figur 3 liefert somit für alle Bildblöcke bzw. Makrobildblöcke einen Bewegungsvektor 330.

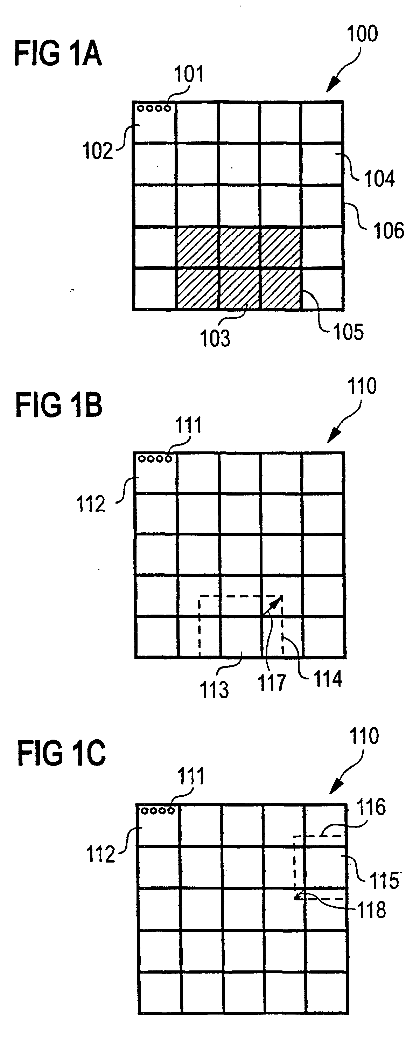

**Fig.1a** zeigt ein digitalisiertes Bild 100, welches mit der in Figur 3 dargestellten Vorrichtung codiert werden soll.

Das digitalisierte Bild 100 weist Bildpunkte 101 auf, denen Codierungsinformation zugeordnet ist.

Die Bildpunkte 101 sind in Bildblöcke 102 gruppiert. Die Bildblöcke 102 sind in einen ersten Bildbereich 105 und in einen zweiten Bildbereich 106 gruppiert.

Es wird im folgenden davon ausgegangen, daß die Qualitätsanforderungen im ersten Bildbereich 105 größer sind als die Anforderungen an die Qualität des zweiten Bildbereichs 106.

Es wird für einen ersten Bildblock 103 im ersten Bildbereich 105 eine Bewegungsschätzung durchgeführt. Dafür wird in einem zeitlich vorangegangenen Bild und/oder in einem zeitlich nachfolgenden Bild 110 ein erster Suchbereich 114 bestimmt.

Ausgehend von einem Startgebiet 113 mit der Größe und Form des ersten Bildblocks, wird, jeweils verschoben um einen Bildpunkt bzw. um einen Bruchteil oder ein Vielfaches eines Bildpunktabstandes (z.B. um einen halben Bildpunkt (Halbbildpunkt-Bewegungsschätzung), um den jeweils das Startgebiet 113 verschoben wird, folgender Fehler E ermittelt:

$$E = \sum_{i=1}^{n}\sum_{j=1}^{m}\left(x_{i,j} - y_{i,j}\right)^2,$$

wobei mit

- i,j Laufindizes,
- n eine Anzahl von Bildpunkten in dem ersten Bildblock entlang einer ersten Richtung,
- m eine Anzahl von Bildpunkten, in dem ersten Bildblock entlang einer zweiten Richtung,
- $x_{i,j}$ die Codierungsinformation des Bildpunkts an der Position x,j innerhalb des erste Bildblocks,
- $y_{i,j}$ die Codierungsinformation des Bildpunkts an der entsprechenden Stelle in dem zeitlich vorangegangen Bild, verschoben um den entsprechenden Bewegungsvektor, bezeichnet werden.

Der Fehler E wird für jede Verschiebung in dem zeitlich vorangegangenen Bild 110 durchgeführt und es wird der Bildblock derjenigen Verschiebung (= Bewegungsvektor) als dem ersten Bildblock 103 am ähnlichsten ausgewählt, dessen Fehler E den geringsten Wert aufweist.

In diesem Ausführungsbeispiel weist der Suchbereich um eine Startposition 113, die der relativen Position des ersten Bildblocks in dem ersten Bild entsprechend in dem zeitlich vorangegangen Bild 110 entspricht sowohl in horizontaler als auch in vertikaler Richtung jeweils vier Bildpunktabstände auf. Somit ist die maximale Größe eines zu codierenden ersten Bewegungsvektors 117 in diesem Fall $4\sqrt{2}$ Bildpunktabstände (vgl. **Fig.1b).**

**Fig.1c** zeigt eine zweite Bewegungsschätzung für einen zweiten Bildblock 104 in dem zweiten Bildbereich 106. Die grundsätzliche Vorgehensweise im Rahmen der Bewegungsschätzung ist auch für die zweite Bewegungsschätzung wie oben dargestellt.

Bei der zweiten Bewegungsschätzung ist ein zweiter Suchbereich 116 kleiner, da die Anforderungen an die Bildqualität in dem zweiten Bildbereich 106 nicht so hoch sind wie die an den ersten Bildbereich 105.

Aus diesem Grund beträgt die Größe des zweiten Suchbereichs 116 in jeder Richtung nur zwei Bildpunkte 116, ausgehend von einer Startposition 115. Somit beträgt die maximale Größe eines zu codierenden zweiten Bewegungsvektors 118 für den zweiten Bildblock 104 $2\sqrt{2}$.

Aus diesem Beispiel wird ersichtlich, daß ein erheblich geringerer Rechenaufwand zur Codierung des zweiten Bewegungsvektor.s 118 erforderlich ist als zur Codierung des ersten Bewegungsvektors 117.

Ausgehend von diesem anschaulichen Beispiel ist in dem Ausführungsbeispiel die Größe eines Suchbereichs für einen Bildblock abhängig von einem Quantisierungsparameter, mit dem angegeben wird, mit welchen Quantisierungsschritten das zeitlich vorangegangene Bild 100 codiert wurde.

Die Größe S eines Suchbereichs ergibt sich gemäß folgender Vorschrift:

$$S = 15 - QP/2$$

wobei mit

- S die Größe des Suchbereichs, und

- QP der Quantisierungsparameter

bezeichnet werden

Der Quantisierungsparameter QP ist eine in üblichen Headerdaten bei H.263 enthaltene Angabe, die als Startwert für die Quantisierung benutzt wird.

Die Größe S des Suchbereichs für einen Bildblock wird also umso größer, je kleiner der Quantisierungsparameter QP ist, was einer hohen Bildqualität entspricht.

Bei der variablen Längencodierung der Bewegungsvektoren werden mehrere Tabellen, die unterschiedliche Codes für unterschiedlich lange Bewegungsvektoren mit unterschiedlichem Wertebereich enthalten, verwendet.

Abhängig von dem Quantisierungsparameter QP wird die Tabelle zur variablen Längencodierung ausgewählt, die einen an die Größe S des Suchbereichs und somit an eine maximale Länge des Bewegungsvektors angepaßten Wertebereich für die Tabelleneinträge der variablen Längencodes aufweist.

Im weiteren werden einige Alternativen zu dem oben dargestellten Ausführungsbeispiel erläutert:

Die Art der Bewegungsschätzung und damit auch die Art der Bildung des Ähnlichkeitsmaßes ist für die Erfindung unerheblich.

So kann beispielsweise für die Bildung des Fehlers E auch folgende Vorschrift eingesetzt werden:

$$E = \sum_{i=1}^{n} \sum_{j=1}^{m} \left| x_{i,j} - y_{i,j} \right| .$$

Es hat sich ferner gezeigt, daß es sogar zur weiteren Reduktion der erforderlichen Datenrate in vielen Fällen ausreichend ist, ein Fehlersignal, welches bei der Bewegungskompensation bei der Bildung der Differenzbilder entsteht, nicht mit zu übertragen, sondern lediglich die Bewegungsvektoren.

Anschaulich ist die Erfindung darin zu sehen, daß für Bildbereiche zur Bewegungsschätzung der Bildblöcke der Bildbereiche Suchräume unterschiedlicher Größe eingesetzt werden, wodurch eine flexible, qualitätsangepaßte Reduktion der erforderlichen Datenrate zur Codierung der Bewegungsvektoren erreicht. wird.

In diesem Dokument ist folgende Veröffentlichung zitiert:

[1] ITU-T Draft Recommendation H.263, Video Coding for Low Bitrate Communiation, May, 1996

## Patentansprüche

1. Verfahren zur Bewegungsschätzung in einem digitalisierten Bild (100, 110) mit Bildpunkten (101, 111),

- bei dem die Bildpunkte in Bildblöcke (102, 112) gruppiert sind,
- bei dem die Bildpunkte zu mindestens einem ersten Bildbereich (105) und einem zweiten Bildbereich (106) gruppiert sind,
- bei dem eine erste Bewegungsschätzung in einem ersten Suchbereich (114) für mindestens einen ersten Bildblock (113) im ersten Bildbereich (105) durchgeführt wird zur Ermittlung eines ersten Bewegungsvektors (117), mit dem eine Verschiebung des ersten Bildblocks im Vergleich zu dem ersten Bildblock in einem zeitlich vorangegangenen Vorgängerbild und/oder im Vergleich zu dem ersten Bildblock in einem zeitlich nachfolgenden Nachfolgerbild beschrieben wird,
- bei dem eine zweite Bewegungsschätzung in einem zweiten Suchbereich (116) für mindestens einen zweiten Bildblock (115) im zweiten Bildbereich (106) durchgeführt wird zur Ermittlung eines zweiten Bewegungsvektors (118), mit dem eine Verschiebung des zweiten Bildblocks im Vergleich zu dem zweiten Bildblock in einem zeitlich vorangegangenen Vorgängerbild und/oder im Vergleich zu dem zweiten Bildblock in einem zeitlich nachfolgenden Nachfolgerbild beschrieben wird,
- bei dem der erste Suchbereich (114) und der zweite Suchbereich (116) eine unterschiedliche Größe aufweisen,

**dadurch gekennzeichnet, daß**

- die Größe des ersten Suchbereichs (114) und/oder des zweiten Suchbereichs (116) abhängig von einer vorgegebenen Bildqualität, mit der der erste Bildblock (103, 113) und/oder der zweite Bildblock (104, 115) codiert wird, verändert wird.

2. Verfahren nach Anspruch 1,
bei dem die Größe des ersten Suchbereichs und/oder des zweiten Suchbereichs abhängig von einem Quantisierungsparameter, mit dem der erste Bildblock und/oder der zweite Bildblock quantisiert wird, verändert wird.

3. Verfahren nach einem der Ansprüche 1 oder 2,
eingesetzt zur Codierung des digitalisierten Bildes.

4. Verfahren nach Anspruch 3,

- bei dem eine variable Längencodierung der Bewegungsvektoren erfolgt,
- bei dem zur variablen Längencodierung mehrere gepeicherte unterschiedliche Tabellen, in denen Codes zur variablen Längencodierung gespeichert sind, verwendet werden.

5. Verfahren nach Anspruch 4,
bei dem die Tabellen angepaßt sind an die maximale Länge der Bewegungsvektoren.

6. Anordnung zur Bewegungsschätzung in einem digitalisierten Bild (100, 110) mit Bildpunkten (101, 111),
mit einem Prozessor (301), der derart eingerichtet ist, daß folgende Schritte durchführbar sind:

- die Bildpunkte sind in Bildblöcke (102, 112) gruppiert,
- die Bildpunkte sind zu mindestens einem ersten Bildbereich (105) und einem zweiten Bildbereich (106) gruppiert,
- eine erste Bewegungsschätzung wird in einem ersten Suchbereich (114) für mindestens einen ersten Bildblock (113) im ersten Bildbereich durchgeführt zur Ermittlung eines ersten Bewegungsvektors (117), mit dem eine Verschiebung des ersten Bildblocks im Vergleich zu dem ersten Bildblock in einem zeitlich vorangegangenen Vorgängerbild und/oder im Vergleich zu dem ersten Bildblock in einem zeitlich nachfolgenden Nachfolgerbild beschrieben wird,
- eine zweite Bewegungsschätzung wird in einem zweiten Suchbereich (116) für mindestens einen zweiten Bildblock (115) im zweiten Bildbereich durchgeführt zur Ermittlung eines zweiten Bewegungsvektors (118), mit dem eine Verschiebung des zweiten Bildblocks im Vergleich zu dem zweiten Bildblock in einem zeitlich vorangegangenen Vorgängerbild und/oder im Vergleich zu dem zweiten Bildblock in einem zeitlich nachfolgenden Nachfolgerbild beschrieben wird,
- der erste Suchbereich (114) und der zweite Suchbereich (116) weisen eine unterschiedliche Größe auf,

**dadurch gekennzeichnet, daß**

- der der Prozessor (301) derart eingerichtet ist, daß die Größe des ersten Suchbereichs (114) und/oder des zweiten Suchbereichs (116) abhängig von einer vorgegebenen Bildqualität, mit der der erste Bildblock (103, 113) und/oder der zweite Bildblock (104, 115) codiert wird, verändert wird.

7. Anordnung nach Anspruch 6,
bei der der Prozessor derart eingerichtet ist, daß die Größe des ersten Suchbereichs und/oder des zweiten Suchbereichs abhängig von einem Quantisierungsparameter, mit dem der erste Bildblock und/oder der zweite Bildblock quantisiert wird, verändert wird.

8. Anordnung nach einem der Ansprüche 6 oder 7, eingesetzt in einer Bildcodiereinrichtung.

9. Anordnung nach einem der Ansprüche 6 oder 7, eingesetzt in einer Bildcodiereinrichtung.
bei der der Prozessor derart eingerichtet ist, daß

- eine variable Längencodierung der Bewegungsvektoren erfolgt,
- zur variablen Längencodierung mehrere gepeicherte unterschiedliche Tabellen, in denen Codes zur variablen Längencodierung gespeichert sind, verwendet werden.

10. Anordnung nach Anspruch 9,
bei der der Prozessor derart eingerichtet ist, daß die Tabellen angepaßt sind an die maximale Länge der Bewegungsvektoren.

**Claims**

1. Method for motion estimation in a digitized image (100, 110) having pixels (101, 112),

   - in which the pixels are grouped in picture blocks (102, 112),
   - in which the pixels are grouped to form at least one first picture area (105) and one second picture area (106),
   - in which first motion estimation is carried out in a first search area (114) for at least one first picture block (113) in the first picture area (105) in order to determine a first motion vector (117) by means of which a movement of the first picture block is described in comparison to the first picture block in a preceding predecessor picture and/or in comparison to the first picture block in a subsequent successor picture,
   - in which second motion estimation is carried out in a second search area (116) for at least one second picture block (115) in the second search area (106) in order to determine a second motion vector (118) by means of which a movement of the second picture block is described in comparison to the second picture block in a preceding predecessor picture and/or in comparison to the second picture block in a subsequent successor picture,
   - in which the first search area (114) and the second search area (116) are of different sizes,

   **characterized in that**

   - the size of the first search area (114) and/or of the second search area (116) is varied as a function of a predetermined picture quality, by means of which the first picture block (103, 113) and/or the second picture block (104, 115) are/is coded.

2. Method according to Claim 1,
   **characterized in that** the size of the first search area and/or of the second search area are/is varied as a function of a quantization parameter by means of which the first picture block and/or the second picture block are/is quantized.

3. Method according to one of Claims 1 to 2,
   used for coding the digitized picture.

4. Method according to Claim 3,

   - in which variable length coding of the motion vectors is carried out,
   - in which a number of stored, different tables, in which codes for variable length coding are stored, are used for variable length coding.

5. Method according to Claim 4,
   **characterized in that** the tables are matched to the maximum length of the motion vectors.

6. Arrangement for motion estimation in a digitized picture (100, 110) having pixels (101, 111),
   having a processor (301) which is set up such that the following steps can be carried out:

   - the pixels are grouped into picture blocks (102, 112),
   - the pixels are grouped to form at least one first picture area (105) and one second picture area (106),
   - first motion estimation is carried out in a first search area (114) for at least one first picture block (113) in the first picture area in order to determine a first motion vector (117) by means of which a movement of the first picture block is described in comparison to the first picture block in a preceding predecessor picture and/or in comparison to the first picture block in a subsequent successor picture,
   - second motion estimation is carried out in a second search area (116) for at least one second picture block (115) in the second picture area in order to determine a second motion vector (118) by means of which a movement of the second picture block is described in comparison to the second picture block in a preceding predecessor picture and/or in comparison to the second picture block in a subsequent successor picture,
   - the first search area (114) and the second search area (116) are of different sizes,

**characterized in that**

- the processor (301) is set up such that the size of the first search area (114) and/or of the second search area (116) are/is varied as a function of a predetermined picture quality by means of which the first picture block (103, 113) and/or the second picture block (104, 115) are/is coded.

**7.** Arrangement according to Claim 6,
**characterized in that** the processor is set up such that the size of the first search area and/or of the second search area are/is varied as a function of a quantization parameter by means of which the first picture block and/or the second picture block are/is quantized.

**8.** Arrangement according to one of Claims 6 or 7, used in a picture coding device.

**9.** Arrangement according to one of Claims 6 or 7, used in a picture coding device,
**characterized in that** the processor is set up such that

- variable length coding of the motion vectors is carried out,
- a number of stored, different tables, in which codes for variable length coding are stored, are used for variable length coding.

**10.** Arrangement according to Claim 9,
**characterized in that** the processor is set up such that the tables are matched to the maximum length of the motion vectors.

## Revendications

**1.** Procédé d'évaluation d'un déplacement dans une image numérisée (100, 110) comportant des points d'image (101, 111),

- selon lequel les points d'image sont regroupés selon des blocs d'image (102, 112),
- selon lequel les points d'image sont regroupés en au moins une première zone d'image (105) et une seconde zone d'image (106),
- selon lequel une première évaluation de déplacement dans une première zone de recherche (114) pour au moins un premier bloc d'image (113) est exécutée dans la première zone d'image (105) et pour la détermination d'un premier vecteur de déplacement (117), avec lequel est décrit un déplacement du premier bloc d'image par rapport au premier bloc d'image dans une image précédente, apparue précédemment dans le temps, et/ou par rapport au premier bloc d'image dans une image suivante apparaissant ultérieurement dans le temps,
- selon lequel une seconde évaluation de déplacement est exécutée dans une seconde zone de recherche (116) pour au moins un second bloc d'image (115) dans la seconde zone d'image (106) pour la détermination d'un second vecteur de déplacement (118), avec lequel est décrit un déplacement du second bloc d'image par rapport au second bloc d'image dans une image précédente, apparue antérieurement dans le temps, et/ou par rapport au second bloc d'image dans une image suivante, apparaissant ultérieurement dans le temps,
- selon lequel la première zone de recherche (114) et la seconde zone de recherche (116) possèdent des tailles différentes,

**caractérisé en ce que**

- la taille de la première zone de recherche (114) et/ou de la seconde zone de recherche (116) sont modifiées en fonction d'une qualité d'image prédéterminée, avec laquelle le premier bloc d'image (103, 113) et/ou le second bloc d'image (104, 115) sont codés.

**2.** Procédé selon la revendication 1, selon lequel la taille de la première zone de recherche et/ou de la seconde zone de recherche est modifiée en fonction d'un paramètre de quantification, avec lequel le premier bloc d'image et/ou le second bloc d'image est quantifiée.

**3.** Procédé selon l'une des revendications 1 ou 2, utilisé pour le codage de l'image numérisée.

**4.** Procédé selon la revendication 3,

- selon lequel un codage de longueur variable des vecteurs de déplacement est exécuté,
- selon lequel pour le codage de longueur variable, on utilise plusieurs tableaux différents mémorisés, dans lesquels sont mémorisés des codes pour le codage de longueur variable.

**5.** Procédé selon la revendication 4, selon lequel les tableaux sont adaptés à la longueur maximale des vecteurs de déplacement.

**6.** Dispositif d'évaluation d'un déplacement dans une image numérisée (100, 110) comportant des points d'image (101, 111),
comportant un processeur (301) qui est agencé de telle sorte qu'on peut mettre en oeuvre les étapes suivantes:

- les points d'image sont regroupés selon des blocs d'image (102, 112),
- les points d'image sont regroupés en au moins une première zone d'image (105) et une seconde zone d'image (106),
- une première évaluation de déplacement dans une première zone de recherche (114) pour au moins un premier bloc d'image (113) est exécutée dans la première zone d'image (105) pour la détermination d'un premier vecteur de déplacement (117), avec lequel est décrit un déplacement du premier bloc d'image par rapport au premier bloc d'image dans une image précédente, apparue précédemment dans le temps, et/ou par rapport au premier bloc d'image dans une image suivante apparaissant ultérieurement dans le temps,
- une seconde évaluation de déplacement est exécutée dans une seconde zone de recherche (110) pour au moins un second bloc d'image (115) dans la seconde zone d'image pour la détermination d'un second vecteur de déplacement (118), avec lequel est décrit un déplacement du second bloc d'image par rapport au second bloc d'image dans une image précédente, apparue antérieurement dans le temps, et/ou par rapport au second bloc d'image dans une image suivante, apparaissant ultérieurement dans le temps,
- la première zone de recherche (114) et la seconde zone de recherche (116) possèdent des tailles différentes,

**caractérisé en ce que**
le processeur (301) est agencé de telle sorte que la taille de la première zone de recherche (114) et/ou de la seconde zone de recherche (116) sont modifiées en fonction d'une qualité d'image prédéterminée, avec laquelle le premier bloc d'image (103, 113) et/ou le second bloc d'image (104, 115) sont codés.

**7.** Dispositif selon la revendication 6, dans lequel le processeur est agencé de telle sorte que la taille de la première zone de recherche et/ou de la seconde zone de recherche est modifiée en fonction d'un paramètre de quantification, avec lequel le premier bloc d'image et/ou le second bloc d'image est quantifiée.

**8.** Dispositif selon l'une des revendications 6 ou 7, utilisé dans un dispositif de codage d'image.

**9.** Dispositif selon l'une des revendications 6 ou 7, utilisé dans un dispositif de codage d'image,
dans lequel le processeur est agencé de telle sorte que

- qu'un codage de longueur variable des vecteurs de déplacement est exécuté,
- pour le codage de longueur variable, on utilise plusieurs tableaux différents mémorisés, dans lesquels sont mémorisés des codes pour le codage de longueur variable.

**10.** Dispositif selon la revendication 9, dans lequel le processeur est agencé de telle sorte que les tableaux sont adaptés à la longueur maximale des vecteurs de déplacement.

## FIG 1A

## FIG 1B

## FIG 1C

# FIG 2

**FIG 3**